# EUROPÄISCHE PATENTSCHRIFT

(11) **EP 2 795 019 B1**
(45) Veröffentlichungstag und Bekanntmachung des Hinweises auf die Patenterteilung: **28.11.2018**
(21) Anmeldenummer: 12797887.2
(22) Anmeldetag: 04.12.2012
(51) Int. Cl.: F16B 21/10

(54) **GEGENSEITIGE, LÖSBARE VERBINDUNG ZWEIER STÜTZENABSCHNITTE EINER LÄNGENVERÄNDERLICHEN BAUSTÜTZE**
MUTUAL, DETACHABLE CONNECTION OF TWO SUPPORT SECTIONS OF A VARIABLE-LENGTH CONSTRUCTION SUPPORT
LIAISON MUTUELLE DÉTACHABLE DE DEUX SECTIONS DE SUPPORT D'UN ÉTAI DE LONGUEUR VARIABLE

(30) Priorität: 22.12.2011 DE 102011122065
(43) Veröffentlichungstag der Anmeldung: 29.10.2014
(73) Patentinhaber: Peri GmbH, 89264 Weissenhorn (DE)
(72) Erfinder: HÄBERLE, Wilfried, 89129 Langenau (DE); SPECHT, Rudolf, 89233 Neu-Ulm (DE)
(74) Vertreter: Kohler Schmid Möbus Patentanwälte
(86) Internationale Anmeldenummer: PCT/EP2012/074387
(87) Internationale Veröffentlichungsnummer: WO 2013/092204

(56) Entgegenhaltungen:
- EP-A1- 0 457 377
- FR-A1- 2 898 923
- GB-A- 746 083
- GB-A- 1 148 656
- US-A- 4 026 079
- US-A1- 2007 264 076

## Beschreibung

Die vorliegende Erfindung bezieht sich im Allgemeinen auf längenveränderliche, teleskopierbare Stützen, wie sie beispielsweise im Bauwesen als Unter- oder Abstützung von Betonschalungselementen zum Einsatz kommen. Die vorliegende Erfindung betrifft einen G-Haken, gemäß dem Oberbegriff des Anspruchs 1, zur gegenseitigen lösbaren Verbindung zweier Stützenabschnitte solch einer teleskopierbaren Baustütze. Darüber hinaus betrifft die Erfindung eine teleskopierbare Baustütze, gemäß Anspruch 8, deren Stützenabschnitte sich mit Hilfe eines erfindungsgemäßen G-Hakens lösbar miteinander verbinden lassen.

Teleskopierbare Stützen, wie sie im Bereich des Bauwesens als Unter- oder Abstützung von Betonschalungselementen zum Einsatz kommen, weisen in aller Regel ein Außenrohr und ein teleskopierbar darin verschiebliches Innenrohr auf. Zur gegenseitigen, lösbaren Verbindung der beiden Rohre dient üblicherweise ein so genannter G-Haken mit kreisrundem Querschnitt, der sich durch in den beiden Rohren ausgebildete und miteinander fluchtende Durchstecköffnungen erstreckt. Die Form des G-Hakens ist dabei üblicherweise so gewählt, dass sich der G-Haken verliersicher an einer teleskopierbaren Stütze befestigen lässt, was über einen Bügel des G-Hakens erfolgt, der die Stütze umgreift. Derartige G-Haken werden dabei üblicherweise als einstückiges bzw. einteiliges Bauteil aus einem Rundstahl durch Umformen desselben gebildet. Da es pro Stütze bis zu 4 t Last oder gar mehr aufzunehmen gilt, muss der Kraftübertragungsbereich zwischen den beiden Rohren und insbesondere der G-Haken sehr sorgfältig dimensioniert werden, da über diesen die gesamte Last vom Innenrohr auf das Außenrohr der Stütze übertragen wird.

Bei dieser Dimensionierung sind häufig die Lochleibungsspannungen entlang der Durchstecköffnungen der beiden Rohre ein maßgebliches Bemessungskriterium, was dazu führt, dass der Durchmesser des G-Hakens in aller Regel größer dimensioniert werden muss, als dies für die Querkrafttragfähigkeit erforderlich wäre. Da außerdem der G-Haken aufgrund eines nicht unerheblichen Spiels zwischen dem Innenrohr und dem Außenrohr auf Biegung beansprucht wird, kann darüber hinaus auch die Bemessung des G-Hakens auf Biegung maßgeblich werden, was wiederum dazu führt, dass der Durchmesser des G-Hakens zur Erzielung eines möglichst großen Widerstandsmoments größer gewählt wird, als dies zur Querkraftabtragung erforderlich wäre. Auch weist der G-Haken üblicherweise über seine gesamte Länge hinweg denselben Querschnitt auf, obwohl nur im Bereich des Außenrohrdurchmessers dieser große Querschnitt erforderlich ist.

Da die G-Haken herkömmlicher Teleskopstützen somit in aller Regel hinsichtlich ihrer Querkrafttragfähigkeit überdimensioniert sind, wodurch unnötiges Gewicht erzeugt und unnötige Kosten generiert werden, liegt der Erfindung die Aufgabe zugrunde, zumindest eine Realisierung anzugeben, mit der sich unnötiges Gewicht sowie die damit einhergehenden Kosten reduzieren lassen.

GB 1 148 656 A offenbart einen G-Haken gemäß dem Oberbegriff des Anspruchs 1.

Gemäß einem ersten Aspekt der vorliegenden Erfindung wird zur Lösung dieser Aufgabe daher ein G-Haken zur gegenseitigen, lösbaren Verbindung zweier Stützenabschnitte einer teleskopierbaren Baustütze zur Verfügung gestellt, der die Merkmale des Anspruchs 1 aufweist.

Der erfindungsgemäße G-Haken umfasst einen Bolzen, der zur gegenseitigen Verbindung der beiden Stützenabschnitte dient, sowie einen Bügel, über den sich der Bolzen verliersicher an der Stütze sichern lässt. Erfindungsgemäß ist es nun vorgesehen, dass es sich bei dem Bolzen und dem Bügel um zwei unterschiedliche Teile handelt, die zunächst als unterschiedliche bzw. separate Komponenten vorliegen, die erst im Rahmen der Herstellung des G-Hakens zu einem zusammengesetzten Bauteil, nämlich dem erfindungsgemäßen G-Haken, zusammengefügt werden. Insbesondere werden während der Herstellung des G-Hakens der Bolzen und der Bügel drehstarr miteinander verbunden, was vorzugsweise über eine Presspassverbindung, eine Formschlussverbindung, eine Schweiß- und/oder eine Lötverbindung erfolgen kann.

Da der Bolzen und der Bügel somit zunächst als separate Teile vorliegen, ist es möglich, nur den Bolzen ganz speziell im Hinblick auf die maßgeblichen Bemessungskriterien zu dimensionieren. Dementsprechend ist es erfindungsgemäß vorgesehen, dass der Bolzen einen Krafteinleitungsabschnitt mit zumindest bereichsweise gekrümmter Oberfläche und einen dem Krafteinleitungsabschnitt diametral gegenüberliegenden Kraftabtragungsabschnitt aufweist, dessen Oberfläche keine oder zumindest eine Krümmung aufweist, die geringer ist als die Krümmung der gekrümmten Oberfläche des Krafteinleitungsabschnitts.

Durch die bevorzugte drehstarre Verbindung zwischen dem Bügel und dem Bolzen des erfindungsgemäßen G-Hakens ist es möglich, den Bügel als offenen Haken auszubilden, ohne dass darunter die Verliersicherung leidet, die durch den Bügel bewerkstelligt wird. So lässt sich nämlich aufgrund der drehstarren Verbindung zwischen dem Bolzen und dem Bügel der Bolzen relativ zu dem Bügel nicht verschwenken, nachdem der Bolzen aus den Durchstecköffnungen einer Baustütze herausgezogen wurde. Somit bleibt auch in diesem entriegelten Zustand des G-Hakens der Abstand zwischen dem freien Ende des Bolzens und dem freien Ende des Bügels aufrechterhalten, welcher derart dimensioniert ist, dass der G-Haken nicht von der jeweiligen Stütze entfernt werden kann, an der er gesichert ist.

Sofern hier davon die Rede ist, dass der Krafteinleitungsabschnitt eine zumindest bereichsweise gekrümmte Oberfläche aufweist, so ist hierunter auch ein im Wesentlichen ebener Krafteinleitungsabschnitt zu verstehen, der nur in den Übergangsbereichen zu den Längsseiten des Bolzens hin abgerundet oder gefast ist. So kann beispielsweise auch ein Vierkantstahl als Bolzen für den erfindungsgemäßen G-Haken zum Einsatz kommen, der nur entlang seiner Kanten abgerundet ist, um unerwünschte Spannungsspitzen im Bereich der angrenzenden Bauteile, insbesondere der Lochleibungen der Stützenrohre zu verhindern. Durch den zumindest bereichsweise gekrümmten Krafteinleitungsabschnitt kann somit sichergestellt werden, dass sich die über den Bolzen zu übertragenden Kräfte auf eine große Fläche verteilen, wodurch in der gewünschten Weise die Lochleibungsspannungen im Bereich der Durchstecköffnungen des Innenrohrs einer teleskopierbaren Baustütze klein gehalten werden können.

Die Ausbildung des Kraftabtragungsabschnitts als ebene oder nur geringfügig gekrümmte Oberfläche erweist sich hingegen insbesondere dann als vorteilhaft, wenn die über den Bolzen zu übertragenden Kräfte nicht direkt, sondern mittelbar über eine Absenkmutter in einen Stützenabschnitt eingeleitet werden sollen, wie es nachfolgend noch genauer erläutert wird. Da diese Absenkmutter ebenfalls eine plane Stirnseite aufweist, auf der der Kraftübertragungsabschnitt des Bolzens aufliegt, wird durch die ebene oder nur geringfügig gekrümmte Oberfläche des Kraftabtragungsabschnitts nicht nur eine Reduzierung der Spannungen zwischen dem Bolzen und der Absenkmutter erreicht. Vielmehr wird durch die ebene oder zumindest nur geringfügig gekrümmte Oberfläche des Kraftabtragungsabschnitts auch sichergestellt, dass sich der Bolzen nicht verdrehen kann, was ansonsten in unerwünschter Weise eine Biegung desselben um seine "schwache Achse" zur Folge haben könnte. Mit anderen Worten wird durch die im Wesentlichen ebene Ausbildung des Kraftabtragungsabschnitts eine Verdrehsicherung oder Selbstzentrierung geschaffen, durch die sichergestellt werden kann, dass der Bolzen stets in der gewünschten Richtung belastet wird.

Die Herstellung des erfindungsgemäßen G-Hakens aus zwei unterschiedlichen, separaten Teilen - Bolzen und Bügel - erweist sich somit insbesondere dahingehend als vorteilhaft, dass der Bolzen ganz speziell im Hinblick auf die maßgeblichen Bemessungskriterien wie beispielsweise Biege- und/oder Querkrafttragfähigkeit sowie Lochleibungsspannungen als Sonderprofil dimensioniert und hergestellt werden kann, wohingegen sich der Bügel aus einem einfachen Standardprofil als leichteres Bauteil herstellen lässt, wodurch letztendlich nicht nur Gewicht, sondern insbesondere auch Kosten eingespart werden können. Die Herstellung des erfindungsgemäßen G-Hakens aus zwei unterschiedlichen, separaten Teilen erweist sich jedoch auch dahingehend als vorteilhaft, dass aufgrund der Mehrteiligkeit der Bolzen und der Bügel aus unterschiedlichen Materialien, insbesondere Stählen unterschiedlicher Güte gefertigt werden können. Somit kann beispielsweise der Bolzen aus einem Stahl der Güte S355 hergestellt sein, wohingegen für den Bügel ein Stahl geringerer Güte zum Einsatz kommen kann, wodurch nochmals Kosten eingespart werden können.

Insbesondere wird somit erstmals ein zweiteiliger G-Haken geschaffen, dessen Einzelteile - Bolzen und Bügel - drehstarr miteinander verbunden sind, wodurch aufgrund der Tatsache, dass nur der Bolzen, der für die Kraftabtragung zwischen den Stützenabschnitten einer teleskopierbaren Baustütze verantwortlich ist, als massives Sonderprofil, beispielsweise als Schmiedeteil, Walzprofil oder Gussteil aus einem Stahl z. B. der Güte S355 ausgeführt werden kann, wohingegen für den Bügel, der lediglich als Verliersicherung dient, ein einfacheres, kostengünstigeres Standardprofil zum Einsatz kommen kann, wodurch in der zuvor erläuterten Weise das Gesamtgewicht des G-Hakens und die Herstellungskosten gering gehalten werden können. Darüber hinaus weist der Bügel des erfindungsgemäßen G-Hakens im Vergleich zu herkömmlichen G-Haken eine geringere Querschnittsfläche auf, was zur Folge hat, dass der Bügel kaltumgeformt werden kann, wohingegen die Bügel herkömmlicher G-Haken aufgrund ihrer größeren Querschnittsfläche in aller Regel warmumgeformt werden müssen. Aufgrund der Kaltumformung können somit die Herstellungskosten weiter reduziert werden.

Gemäß einem weiteren Aspekt der vorliegenden Erfindung wird die derselben zugrunde liegende Aufgabe auch durch eine teleskopierbare Baustütze mit einem Außenrohr und einem darin verschieblichen Innenrohr gelöst, wobei zur gegenseitigen lösbaren Verbindung der beiden Rohre ein erfindungsgemäßer G-Haken zum Einsatz kommt, der sich durch in den beiden Rohren ausgebildete und miteinander fluchtende Durchstecköffnungen erstreckt.

Im Folgenden wird nun auf vorteilhafte Ausführungsformen der Erfindung eingegangen; weitere vorteilhafte Ausführungsformen können sich ferner aus den abhängigen Ansprüchen, der Figurenbeschreibung sowie den Zeichnungen ergeben.

Die im Folgenden unter Bezugnahme auf den erfindungsgemäßen G-Haken sowie die erfindungsgemäße Baustütze erläuterten Merkmale gelten in entsprechender Weise auch für den jeweils nicht explizit in Bezug genommenen Gegenstand. Beispielsweise lassen sich die hinsichtlich des erfindungsgemäßen Bolzens erläuterten Merkmale in entsprechender Weise auf die teleskopierbare Baustütze bzw. deren G-Haken übertragen.

Erfindungsgemäß weist der Bolzen ein frei auskragendes erstes Ende und ein dem ersten Ende gegenüberliegendes festes zweites Ende auf, im Bereich dessen er mit dem Bügel derart verbunden ist, dass die Stirnfläche des Bolzens an seinem zweiten Ende als Schlagfläche freiliegt. Insbesondere können dabei der Krafteinleitungsabschnitt und der Kraftabtragungsabschnitts des Bolzens über einen Übergangsabschnitt miteinander verbunden sein, von dem der Bügel vorzugsweise rechtwinklig absteht und sich im Anschluss hieran in Richtung seines freien ersten Endes zumindest bereichsweise parallel zu dem Bolzen erstreckt. Anders als bei herkömmlichen G-Haken, bei denen der Bolzen einstückig in den Bügel übergeht, weist der Bolzen des erfindungsgemäßen G-Hakens also eine definierte Stirnfläche an seinem zweiten Ende auf, über die der Bolzen beispielsweise unter Verwendung eines Hammers in die Durchstecköffnungen einer Baustütze getrieben werden kann, indem mit dem Hammer Schläge auf die in Rede stehende Stirnfläche des Bolzens ausgeübt werden.

Um den Bolzen und den Bügel des erfindungsgemäßen G-Hakens mit einfachen Mitteln miteinander verbinden zu können, ist es gemäß einer weiteren Ausführungsform vorgesehen, dass im Bereich des zweiten Endes des Bolzens in dem Übergangsabschnitt eine Öffnung ausgebildet ist, in der ein zweites Ende des Bügels gesichert ist. Vorzugsweise ist es dabei vorgesehen, dass die Öffnung und das zweite Bügelende derart komplementär zueinander konturiert ausgebildet sind, dass das zweite Bügelende formschlüssig und drehfest in der Öffnung gesichert ist. In diesem Falle ist es ausreichend, das zweite Bügelende beispielsweise mit einem Schweißpunkt an dem Bolzen zu sichern, so dass das zweite Bügelende nicht aus der in dem Übergangsabschnitt des Bolzens ausgebildeten Öffnung herausgezogen werden kann. Ebenfalls wäre es möglich, das zweite Bügelende, nachdem es in die Öffnung in den Übergangsabschnitt des Bolzens eingeführt wurde, geringfügig aufzuweiten, um so zusätzlich eine reibschlüssige Verbindung zwischen dem zweiten Bügelende und dem Bolzen zu erzeugen. Durch eine Aufweitung des zweiten Bügelendes außerhalb der Öffnung des Übergangsabschnitts wird dann zusätzlich zu dem erzeugten Reibschluss sichergestellt, dass das zweite Bügelende nicht aus dieser Öffnung entfernt werden kann.

Gemäß einer weiteren Ausführungsform ist es vorgesehen, dass der Bolzen eine im Wesentlichen U-förmige, C-förmige, Doppel-T-Träger-artige, O-förmige, rohrförmige oder ovale Querschnittskonfiguration aufweist. Im Falle eines U-förmigen Querschnitts bilden die freien Enden des "U" zusammen den Kraftabtragungsabschnitt und folglich bildet der Bogen des "U" den Krafteinleitungsabschnitt des Bolzens. Wenn der Bolzen hingegen einen im Wesentlichen Doppel-T-Träger-artigen Querschnitt aufweist, wird der Krafteinleitungsabschnitt durch einen der Flansche des Doppel-T mit zumindest bereichsweise gekrümmter Oberfläche gebildet, wohingegen der Kraftabtragungsabschnitts durch den anderen, weniger oder nicht gekrümmten Flansch des Doppel-T gebildet wird. Im Falle eines C-förmigen Bolzenquerschnitts werden der Krafteinleitungsabschnitt und der Kraftabtragungsabschnitts durch einander diametral gegenüberliegende Krümmungsabschnitte des "C" gebildet, wobei jedoch einer dieser Krümmungsabschnitte als Kraftabtragungsabschnitt abgeflacht sein kann.

Um eine Einführhilfe für den G-Haken in die Durchstecköffnungen der jeweiligen Stütze zu schaffen, in die es den G-Haken einzustecken gilt, ist es gemäß einer weiteren Ausführungsform vorgesehen, dass sich der Bolzen in Richtung seines frei auskragenden ersten Endes zumindest bereichsweis keilartig verjüngt.

Vorzugsweise ist es dabei vorgesehen, dass der an sich keilartige Bolzen zwei in Bolzenlängsrichtung zueinander beabstandete Plateaubereiche aufweist, im Bereich derer sich der Bolzen nicht verjüngt. Bei dieser Ausführungsform wird der Bolzen ausgehend von seinem frei auskragenden Ende in Längsrichtung betrachtet durch einen sich aufweitenden ersten Keilabschnitt, einen sich daran anschließenden ersten Plateaubereich, einen sich daran anschließenden, sich aufweitenden zweiten Keilabschnitt und einen sich daran anschließenden zweiten Plateaubereich gebildet, wobei vorzugsweise der zweite Keilabschnitt von dem ersten Plateaubereich durch eine Stufe getrennt ist. Die beiden Plateaubereiche sind dabei um ein Maß voneinander beabstandet, das etwa dem Durchmesser des Innenrohrs der jeweiligen Baustütze entspricht, so dass das Innenrohr im Rüstzustand mit den Lochleibungen seiner Durchstecköffnungen auf den beiden Plateaubereichen aufstehen kann. Da die Plateaubereiche des Bolzens anders als die Keilabschnitte einen definierten Abstand zur Unterseite des Bolzens aufweisen, ist somit zum einen gewährleistet, dass die jeweilige Baustütze, deren Länge unter Verwendung eines erfindungsgemäßen G-Hakens abgesteckt wird, eine definierte Länge aufweist, die nicht davon abhängt, wie weit der an sich keilförmige Bolzen in die Durchstecköffnungen der Stütze hinein getrieben wurde. Zum anderen wird durch die Plateaubereiche sichergestellt, dass sich der an sich keilförmig verjüngende Bolzen unter dynamischen Lasten, die auf die Stütze einwirken können, nicht losrütteln kann.

Darüber hinaus erweist sich die keilförmige Ausbildung des Bolzens dahingehend als vorteilhaft, dass dadurch eine so genannte Schnellabsenkung des Stützenkopfs realisiert werden kann, um so eine Entlastung der Stütze zu erzielen. Wird nämlich der Bolzen im Rüstzustand der jeweiligen Stütze aus den Durchstecköffnungen derselben wieder teilweise herausgetrieben, so führt dies dazu, dass sich das Innenrohr entsprechend der Verjüngung des Bolzens absenkt, wodurch die Stütze entlastet wird und anschließend leichter demontiert werden kann. Da während des Rüstvorgangs theoretisch die Möglichkeit besteht, den Bolzen so weit in die Durchstecköffnungen einer Stütze hineinzutreiben, dass das Innenrohr nicht in der gewünschten Weise auf den beiden Plateaubereichen sondern nur auf dem sich aufweitenden zweiten Keilabschnitt aufsteht, ist es gemäß einer weiteren Ausführungsform vorgesehen, dass der zweite Keilabschnitt von dem ersten Plateaubereich durch eine Stufe getrennt ist. Diese Stufe dient dabei gewissermaßen als Anschlag, der mit der Innenwandung des Innenrohrs der Stütze in Anlage gelangt, wodurch verhindert wird, dass der Bolzen so weit in die Durchstecköffnungen hineingetrieben wird, dass das Innenrohr nur noch auf dem sich aufweitenden zweiten Keilabschnitt aufsteht.

Wie den voranstehenden Ausführungen entnommen werden kann, liegt der vorliegenden Erfindung die Erkenntnis zugrunde, dass herkömmliche G-Haken in aller Regel bereichsweise überdimensioniert sind, weshalb erfindungsgemäß vorgeschlagen wird, den G-Haken aus zwei separaten Teilen - Bolzen und Bügel - zu fertigen, wodurch es ermöglicht wird, nur den Bolzen ganz gezielt als Sonderprofil auszubilden, um so die benötigten Widerstandsmomente erzielen bzw. die zulässigen Lochleibungsspannungen einhalten zu können. Damit jedoch tatsächlich die zulässigen Lochleibungsspannungen eingehalten werden können, ist es ferner vorgesehen, dass die Durchstecköffnungen des Innenrohrs zumindest entlang des Lochleibungsbereichs, über den die Kraftübertragung von dem Innenrohr auf den Krafteinleitungsabschnitt des Bolzens erfolgt, komplementär zur Umhüllenden des Bolzens konturiert sind, wobei die Durchstecköffnungen des Innenrohrs im Falle eines sich keilartig verjüngenden Bolzens unterschiedliche Höhenabmessungen aufweisen. Wenn also beispielsweise der Bolzen eine C-förmige Querschnittsgeometrie aufweist, ist es vorgesehen, dass die Durchstecköffnungen des Innenrohrs analog zur Umhüllenden des C-Profils des Bolzens eine ovale Gestalt aufweisen, damit die Kräfte aus dem Innenrohr möglichst großflächig verteilt über die Lochleibung der jeweiligen Durchstecköffnung auf dem Bolzen übertragen werden können.

Um die auf diese Weise in den Bolzen eingeleiteten Lasten in der gewünschten Weise über den Bolzen in das Außenrohr einer teleskopierbaren Baustütze ableiten zu können, erfolgt die Lastabtragung auf das Außenrohr über die bereits zuvor erwähnte Absenkmutter, welche im Bereich zweier miteinander fluchtender Durchstecköffnungen des Außenrohrs, die als zwei in Stützenlängsrichtung verlaufende Schlitze ausgebildet sind, über ein am Außenrohr ausgebildetes Außengewinde in Stützlängsrichtung bewegbar ist. Die Absenkmutter weist dabei eine plane Stirnseite auf, auf der der Kraftabtragungsabschnitt des Bolzens des G-Hakens flächig aufsteht, so dass im Falle, dass der Bolzen zum Verkippen um seine Längsachse neigen sollte, eine Rückstellkraft erzeugt wird, die den Bolzen zurück in seine bestimmungsgemäße Orientierung überführt, in der er mit seinem Kraftabtragungsabschnitt vollflächig auf der planen Stirnseite der Absenkmutter aufliegt. Auf diese Weise wird nicht nur eine Verdrehsicherung sondern zusätzlich auch eine Reduzierung der auf die Absenkmutter einwirkenden Spannungen erzielt, wodurch von einer Härtung der Oberfläche der Absenkmutter abgesehen werden kann. Somit kann verhindert werden, dass sich der Bolzen des G-Hakens in die plane Stirnseite der Absenkmutter eindrückt, was ansonsten in unerwünschter Weise dazu führen könnte, dass sich die Absenkmutter unter Last nicht mehr oder nur schwer lösen oder zu Zwecken der Längenfeinjustierung der Stütze nicht mehr in der gewünschten Weise drehen lässt.

Im Folgenden wird die Erfindung nun rein exemplarisch anhand beispielhafter Ausführungsformen unter Bezugnahme auf die beigefügten Zeichnungen beschrieben, wobei:
- Fig. 1: eine perspektivische Darstellung eines erfindungsgemäßen G-Hakens gemäß einer ersten Ausführungsform zeigt;
- Fig. 2: eine andere perspektivische Darstellung des G-Hakens der Fig. 1 zeigt;
- Fig. 3: eine Seitenansicht des G-Hakens der Fig. 1 und 2 zeigt;
- Fig. 4: eine vergrößerte Darstellung des Details "A" der Fig. 3 zeigt;
- Fig. 5: eine Schnittdarstellung entlang den Schnittlinien B-B der Fig. 4 zeigt;
- Fig. 6: eine andere Querschnittsform für den Bolzen eines erfindungsgemäßen G-Hakens zeigt;
- Fig. 7: eine noch andere Querschnittsform für den Bolzen eines erfindungsgemäßen G-Hakens zeigt;
- Fig. 8: eine perspektivische Darstellung eines Abschnitts einer erfindungsgemäßen Baustütze zeigt;
- Fig. 9: einen Vertikalschnitt durch die Stütze der Fig. 8 zeigt;
- Fig. 10: eine Ansicht des Innenrohrs der Stütze der Fig. 8 im Bereich einer Durchstecköffnung zeigt;
- Fig. 11: eine perspektivische Darstellung eines erfindungsgemäßen G-Hakens gemäß einer anderen Ausführungsform zeigt;
- Fig. 12: eine andere perspektivische Darstellung des G-Hakens der Fig. 11 zeigt;
- Fig. 13: einen Vertikalschnitt durch eine Baustütze mit dem G-Haken gemäß den Fig. 11 und 12 zeigt;
- Fig. 14: eine Ansicht des Innenrohrs der Stütze der Fig. 13 im Bereich der Durchstecköffnungen zeigt; und
- Fig. 15: das Detail "E" der Fig. 13 in vergrößerter Darstellung zeigt.

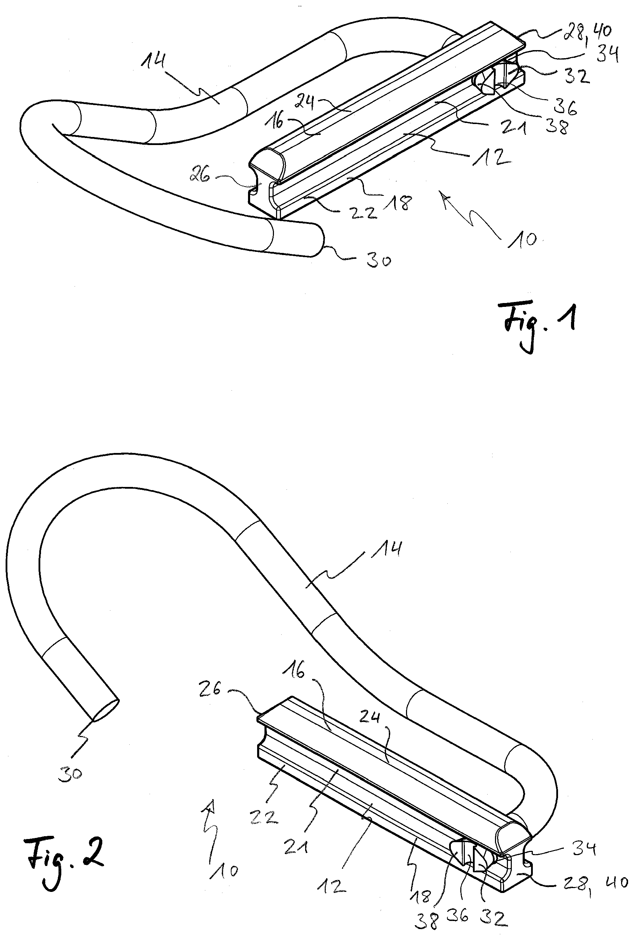

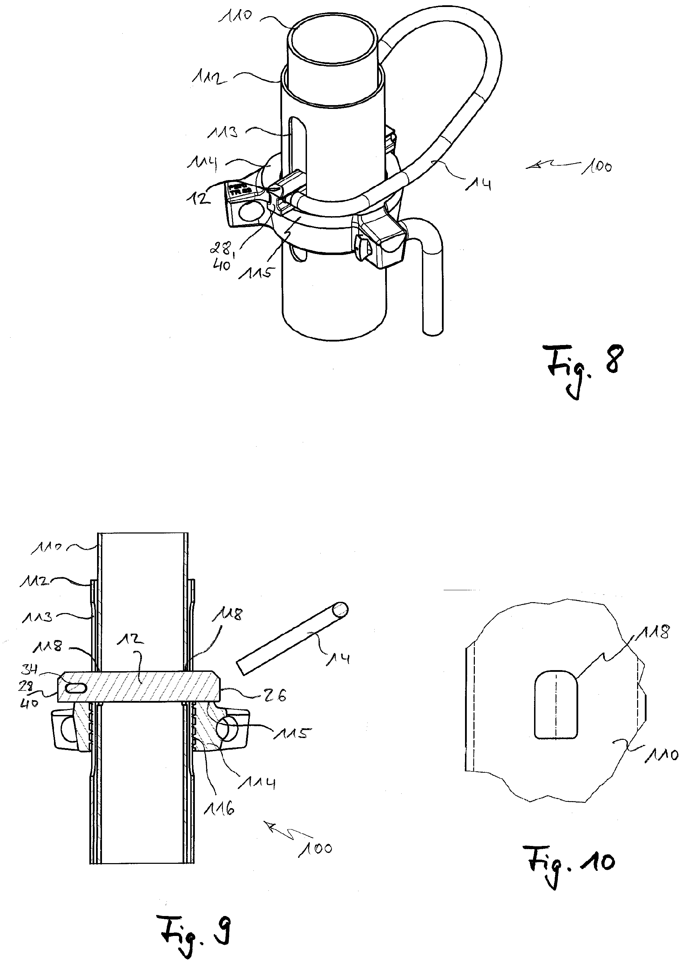

Im Folgenden wird nun zunächst unter Bezugnahme auf die Fig. 1 bis 3 eine erste Ausführungsform eines erfindungsgemäßen G-Hakens 10 beschrieben, welcher zur gegenseitigen, lösbaren Verbindung zweier Stützenabschnitte 110, 112 einer teleskopierbaren Baustütze 100 dient, wie sie beispielhaft unter Bezugnahme auf die Fig. 8 nachfolgend genauer beschrieben wird. Der erfindungsgemäße G-Haken 10 setzt sich im Wesentlichen aus zwei unterschiedlichen, separaten Teilen, nämlich einem Bolzen 12, der zur gegenseitigen Verbindung der beiden Stützenabschnitte dient, und einem Bügel 14 zusammen, über den der Bolzen 12 verliersicher an der Baustütze 100 gesichert werden kann, indem der Bügel 14 die Baustütze 100 umgreift. Erfindungsgemäß sind die beiden Teile - Bolzen 12 und Bügel 14 - aus denen sich der G-Haken 10 zusammensetzt,
vorzugsweise drehstarr miteinander verbunden, was beispielsweise dadurch erfolgen kann, dass der Bügel 14 mit dem Bolzen 12 verschweißt wird. In der dargestellten Ausführungsform sind der Bolzen 12 und der Bügel 14 jedoch form- und reibschlüssig miteinander verbunden, worauf nachfolgend noch genauer eingegangen wird.

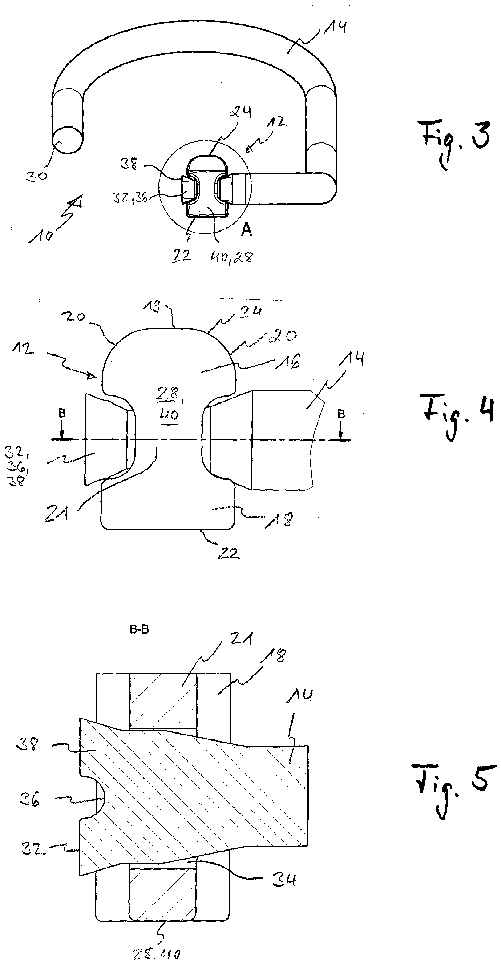

Wie insbesondere dem in der Fig. 4 dargestellten Detail "A" der Fig. 3 entnommen werden kann, weist der Bolzen 12 in der dargestellten Ausführungsform einen im Wesentlichen Doppel-T-Träger-artigen Querschnitt auf, wobei der obere Flansch 16 in seinem mittleren Bereich 19 eine ebene Oberfläche mit unendlich kleiner Krümmung aufweist, wohingegen der obere Flansch 16 in seinen Seitenbereichen 20 jeweils mit einer gekrümmten Oberfläche ausgebildet ist, deren Krümmung auch deutlich größer sein kann als bei der in der Fig. 4 dargestellten Ausführungsform, so dass der Querschnitt zur Schnittlinie B-B im Wesentlichen symmetrisch wäre. Der obere Flansch 16 ist über einen Steg 21 bzw. Übergangsbereich 21 mit dem unteren Flansch 18 des Doppel-T-Träger-artigen Bolzens 12 verbunden, wobei die untere Oberfläche des unteren Flansches 18 im Wesentlichen eben ausgebildet ist und somit ebenfalls eine unendlich kleine Krümmung besitzt.

Die ebene Oberfläche des unteren Flansches 18 bildet einen Kraftabtragungsabschnitts 22 des Bolzens 12, da über diesen die in den Bolzen 12 eingeleiteten Kräfte gleichmäßig verteilt abgeleitet werden können. Die zumindest bereichsweise gekrümmte Oberfläche des oberen Flansches 16 bildet hingegen einen Krafteinleitungsabschnitt 24 des Bolzens, über den die Kräfte aus der Stütze in den Bolzen 12 eingeleitet werden, wobei durch die gekrümmten Seitenbereiche 20 eine gleichmäßige Lochleibungsspannungsverteilung erreicht werden kann.

Aufgrund der Ausbildung des Bolzens 12 mit einem im Wesentlichen Doppel-T-Träger-artigen Querschnitt ist es im Vergleich zu einem herkömmlichen G-Haken mit kreisrundem Querschnitt möglich, mit geringerem Materialverbrauch die gleichen oder sogar verbesserte statische Querschnittswerte zu erzielen, wodurch letztendlich die Herstellungskosten gesenkt werden können. Insbesondere lassen sich jedoch die Kosten für die Herstellung des erfindungsgemäßen G-Hakens 10 dadurch reduzieren, dass es sich bei dem Bolzen 12 und bei dem Bügel 14 um unterschiedliche Teile handelt, so dass beispielsweise der Bügel 14 aus einem einfachen Rundstahl geringer Güte gefertigt werden kann, wohingegen der Bolzen 12 als Sonderprofil aus hochwertigerem Stahl mit beispielsweise Doppel-T-Träger-artigem Querschnitt gefertigt werden kann, wie dies bei der unter Bezugnahme auf die Fig. 1 bis 5 dargestellten Ausführungsform der Fall ist. Mit anderen Worten lassen sich die Kosten für den erfindungsgemäßen G-Haken 10 aufgrund der Zweiteiligkeit desselben dadurch reduzieren, dass beispielsweise der Bolzen 12 als verhältnismäßig massives Bauteil mit optimierten statischen Querschnittswerten ausgebildet wird, wohingegen für den Bügel 14 ein weniger massives Standardprofil mit geringeren statischen Querschnittswerten zum Einsatz kommen kann. Dementsprechend ließen sich die Kostenvorteile der vorliegenden Erfindung auch bei einer Ausführungsform erzielen, bei der der Bolzen 12 als einfaches Vierkantprofil mit gegebenenfalls geringfügig abgerundeten Kanten ausgebildet ist, um so wie bei den unter Bezugnahme auf die Fig. 1 bis 5 erläuterten Ausführungsform eine möglichst gleichmäßige Lochleibungsspannungsverteilung erzielen zu können.

Die Herstellung des erfindungsgemäßen G-Hakens 10 aus zwei unterschiedlichen, separaten Komponenten 12, 14 erweist sich jedoch nicht nur deshalb als vorteilhaft, als der Bolzens 12 und der Bügel 14 aufgrund der Zweiteiligkeit unterschiedliche Querschnitte aufweisen können. Vielmehr lassen sich aufgrund der Zweiteiligkeit des G-Hakens 10 der Bolzen 12 und der Bügel 14 aus unterschiedlichen Materialien, insbesondere Stählen unterschiedlicher Güte fertigen, so dass nur der Bolzen 12 beispielsweise aus einem Stahl der Güte S355 gefertigt werden braucht, wohingegen für den Bügel 14 ein Stahl geringerer Güte zum Einsatz kommen kann, wodurch die Herstellungskosten nochmals gesenkt werden können. Darüber hinaus weist der Bügel 14 des erfindungsgemäßen G-Hakens 10 im Vergleich zu herkömmlichen G-Haken eine geringere Querschnittsfläche auf, was zur Folge hat, dass der Bügel 14 kaltumgeformt werden kann, wohingegen die Bügel herkömmlicher G-Haken aufgrund ihrer größeren Querschnittsfläche in aller Regel warmumgeformt werden müssen. Aufgrund der Kaltumformung können somit die Herstellungskosten weiter reduziert werden.

Ein weiterer Vorteil des erfindungsgemäßen G-Hakens 10 ergibt sich dadurch, dass aufgrund der Anbringung des Bügels 14 als separates Bauteil an dem Bolzen 12 das dem vorderen, frei auskragenden ersten Ende 26 gegenüberliegende zweite Ende 28 des Bolzens bzw. die Stirnfläche 40 am zweiten Ende 28 des Bolzens 12 nach außen hin freiliegt und somit als Schlagfläche verwendet werden kann, über die der Bolzen 12 in die Durchstecköffnungen einer Baustütze hineingetrieben werden kann. So ist nämlich der Bügel 14 seitlich an dem Steg 21 angebracht, der den als Krafteinleitungsabschnitt 24 dienenden oberen Flansch 16 und den als Kraftabtragungsabschnitts 22 dienenden unteren Flansch 18 miteinander verbindet. Aufgrund der Tatsache, dass der Bügel 14 somit im Wesentlichen rechtwinklig von dem Übergangsabschnitt 21 absteht, um sich von dort aus in Richtung seines freien ersten Endes 30 zu erstrecken, liegt somit die Stirnfläche 40 am zweiten Ende 28 des Bolzens 12 frei, so dass über diese der Bolzen 12 mit Hilfe eines Hammers in die Durchstecköffnungen einer Stütze eingetrieben werden kann. Da der Bügel 14 im Wesentlichen rechtwinklig von dem Übergangsabschnitt 21 absteht, muss der Bügel 14 nur um etwa 90° gebogen werden, um sich von dort aus in Richtung seines freien ersten Endes 30 zu erstrecken. Im Vergleich zu herkömmlichen G-Haken kann somit der Biegeradius vergrößert werden, so dass selbst größere Bügelquerschnitte durch Kaltumformen gebogen werden können, wodurch die Herstellungskosten gering gehalten werden.

Zwar ließe sich der Bügel 14 seitlich im Bereich des zweiten Endes 28 des Bolzens 12 an dem Steg 21 anschweißen. In der dargestellten Ausführungsform ist es jedoch vorgesehen, dass im Bereich des zweiten Endes 28 des Bolzens 12 eine Öffnung 34 in dem Steg 21 ausgebildet ist, die das zweite Ende 32 des Bügels 14 aufnimmt. Wie am besten den Fig. 5 und 9 entnommen werden kann, weist dabei die Öffnung 34 eine ovale Gestalt auf, durch die das zuvor zu einem ovalen Querschnitt umgeformte zweite Ende 32 des Bügels 14 hindurchgesteckt ist, so dass aufgrund der zueinander komplementären Konturen der Öffnung 34 und des zweiten Endes 32 des Bügels 14 bereits eine drehstarre Verbindung zwischen dem Bolzen 12 und dem Bügel 14 gegeben ist.

Um zu verhindern, dass der Bügel 14 wieder aus der Öffnung 34 herausgezogen werden kann, ist bei der unter Bezugnahme auf die Fig. 1 bis 5 dargestellten Ausführungsform in die Stirnseite des Bügels 14 am zweiten Ende 32 eine Kerbe 36 eingeprägt, durch die das zweite Ende 32 des Bügels 14 aufgeweitet ist, so dass der Bügel 14 verliersicher mit dem Bolzen 12 verbunden ist. Anstatt den Bügel 14 in der Öffnung 34 über die mittels der Kerbe 36 hervorgerufene Aufweitung zu sichern, ist es jedoch ebenfalls möglich, den Bügel 14 punktuell mit dem Steg 21 zu verschweißen oder zu verlöten, wodurch ebenfalls verhindert werden kann, dass der Bügel 14 aus der Öffnung 34 entfernt werden kann.

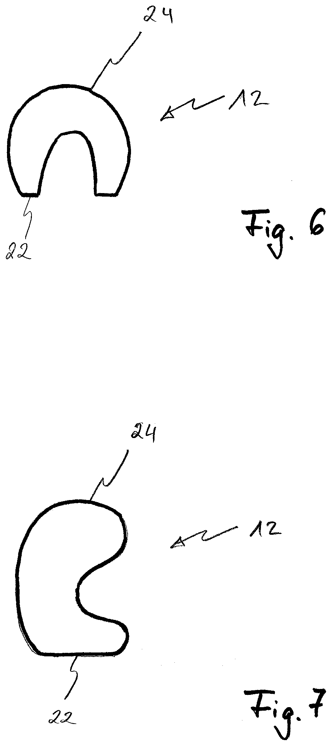

Obwohl der unter Bezugnahme auf die Fig. 1 bis 5 dargestellte G-Haken 10 einen Bolzen 12 mit im Wesentlichen Doppel-T-Träger-artigen Querschnitt aufweist, kann der Bolzen 12 jedoch auch andere Querschnittsformen aufweisen. Beispielsweise kann der Bolzen 12 in der bereits zuvor erläuterten Weise einen Vierkantquerschnitt mit leicht abgerundeten oder gefasten Kanten aufweisen. Gemäß einer weiteren Ausführungsform ist es vorgesehen, dass der Bolzen 12 einen im Wesentlichen U-förmigen Querschnitt gemäß Fig. 6 aufweist, wobei die beiden freien Enden des "U" jeweils abgeflacht sind, um gemeinsam einen Kraftabtragungsabschnitt 22 zu bilden, über den die in den Bolzen 12 eingeleiteten Kräfte gleichmäßig verteilt abgeleitet werden können. Der den beiden freien Enden des "U" gegenüberliegende Oberflächenabschnitt des Bolzens 12 bildet hingegen einen Krafteinleitungsabschnitt 24 mit gekrümmter Oberfläche, wodurch in der gewünschten Weise eine gleichmäßige Lochleibungsspannungsverteilung erreicht werden kann.

Gemäß einer weiteren Ausführungsform kann der erfindungsgemäße G-Haken 10 einen Bolzen 12 mit im Wesentlichen C-förmiger Querschnittsgestalt aufweisen, wie dies in der Fig. 7 dargestellt ist. Auch hier ist wiederum sowohl ein gekrümmter Krafteinleitungsabschnitt 24 als auch ein abgeflachter Kraftabtragungsabschnitts 22 vorgesehen, welche hier durch die einander diametral gegenüberliegenden Krümmungsabschnitte des "C" gebildet werden.

Unter Bezugnahme auf die Fig. 8 bis 10 wird nun eine erfindungsgemäße teleskopierbare Baustütze 100 beschrieben, welche ein Außenrohr 112 und ein teleskopierbar darin verschiebliches Innenrohr 110 aufweist. Gemäß Fig. 9 ist das Außenrohr 112 an seinem freien Ende mit einem Außengewinde 116 versehen (in der Fig. 8 der Übersichtlichkeit halber nicht dargestellt), auf das eine Absenkmutter 114 aufgeschraubt ist. Darüber hinaus weist das Außenrohr 112 zwei einander gegenüberliegende Durchstecköffnungen 113 in Form länglicher Schlitze auf, wohingegen das Innenrohr 110 an seinem freien Ende mehrere in Stützenlängsrichtung zueinander beabstandete Durchstecköffnungen 118 aufweist, welche mit den länglichen Durchstecköffnungen 113 des Außenrohrs 112 fluchten.

Wie insbesondere der Fig. 9 entnommen werden kann, erstreckt sich der G-Haken 10 mit seinem Bolzen 12 durch die in den beiden Rohren 110, 112 ausgebildeten und miteinander fluchtenden Durchstecköffnungen 113, 118, wobei hier der Bolzen 12 des G-Hakens 10 die insbesondere unter Bezugnahme auf die Fig. 4 erläuterte Doppel-T-Träger-artige Querschnittskonfiguration aufweist. Die Lasten aus dem Innenrohr 110 werden folglich über die Lochleibungen der Durchstecköffnungen 118 in den Bolzen 12 und von dort über die Absenkmutter 114 auf das Außenrohr 112 der Stütze 100 übertragen. Um die Lochleibungsspannungen entlang der Lochleibungen der Durchstecköffnungen 118 in der gewünschten Weise klein zu halten, sind die Durchstecköffnungen 118 des Innenrohrs 110 komplementär zu der Umhüllenden des Bolzens 12 konturiert. Ebenfalls werden die Flächenpressungen zwischen der Absenkmutter 114 und dem abgeflachten Kraftabtragungsabschnitt 22 klein gehalten, was darauf zurückzuführen ist, dass dieser vollflächig auf der planen Stirnseite 115 der Absenkmutter 114 aufsteht.

Da die Flächenpressungen zwischen der Absenkmutter 114 und dem Kraftabtragungsabschnitt 22 somit klein gehalten werden, besteht keine Gefahr, dass sich der Bolzen 12 in die Absenkmutter 114 eindrückt, was andernfalls zur Folge hätte, dass sich die Absenkmutter 114 zur Längenfeinjustierung der teleskopierbaren Baustütze 100 nicht oder nur noch schwer drehen oder unter Last nicht oder nur noch schwer lösen lässt. Darüber hinaus wird der Tendenz des G-Hakens 10, sich aufgrund seiner G-förmigen Gestalt um die Längsachse des Bolzens 12 zu verdrehen, durch die ebene Ausbildung des Kraftabtragungsabschnitts 22 des Bolzens 12 entgegengewirkt, indem die in dem Bolzen 12 wirkenden Querkräfte in Verbindung mit der ebenen Ausbildung des Kraftabtragungsabschnitts 22 als Rückstellkraft auf den G-Haken 10 einwirken, die einer unerwünschten Drehung desselben entgegenwirkt.

Im Falle, dass zur Längenfeinjustierung keine Absenkmutter 114 vorgesehen sein sollte, und folglich anstelle der schlitzförmigen Durchstecköffnungen 113 im Außenrohr 112 wie im Innenrohr 110 mehrere beabstandet zueinander angeordnete Durchstecköffnungen 113 vorgesehen sind, können diese Durchstecköffnungen 113 und/oder auch die Durchstecköffnungen 118 im Innenrohr 110 eine zur Kontur des jeweiligen Bolzens 12 komplementäre Kontur aufweisen. Die Kontur der jeweiligen Durchstecköffnung 113, 118 muss dabei nicht exakt der Kontur des Bolzens 12 entsprechen, sofern sie eine unerwünschte Bolzendrehung verhindert. Auch auf diese Weise kann somit eine Verdrehsicherung geschaffen werden, so dass in diesem Falle zugunsten der Reduzierung der Lochleibungsspannungen von einer ebenen Ausbildung des Kraftabtragungsabschnitts 22 zumindest dann abgesehen werden könnte, wenn keine Absenkmutter 114 zur Längenfeinjustierung vorgesehen ist, in die sich der Bolzen 12 eindrücken könnte.

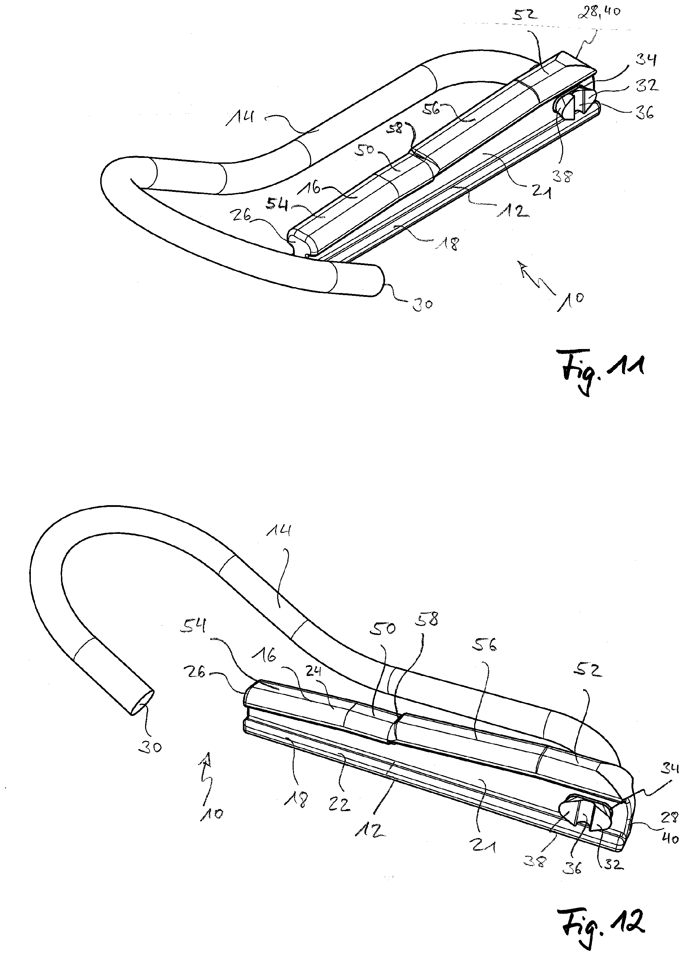

Unter Bezugnahme auf die Fig. 11 und 12 wird nun eine weitere Ausführungsform eines erfindungsgemäßen G-Hakens 10 beschrieben, welcher sich von der unter Bezugnahme auf die Fig. 1 bis 5 dargestellte erste Ausführungsform im Wesentlichen lediglich dadurch unterscheidet, dass sich der Bolzen 12 in Richtung seines frei auskragenden ersten Endes 26 zumindest bereichsweise keilartig verjüngt. Zwar kann sich der Bolzen 12 durchgehend von seinem zweiten Ende 28 bis zu seinem ersten Ende 26 kontinuierlich verjüngen; gemäß der in den Fig. 11 und 12 dargestellten Ausführungsform ist es jedoch vorgesehen, dass der im Wesentlichen keilförmige Bolzen 12 in seinem Krafteinleitungsabschnitt 24 zwei in Bolzenlängsrichtung zueinander beabstandete Plateaubereiche 50, 52 aufweist, im Bereich derer sich der Bolzen 12 nicht verjüngt. Der Bolzen 12 wird somit ausgehend von seinem frei auskragenden ersten Ende 26 in Längsrichtung betrachtet durch einen sich aufweitenden ersten Keilabschnitt 54, einen sich daran anschließenden ersten Plateaubereich 50, einen sich daran anschließenden, sich aufweitenden zweiten Keilabschnitt 56 und einen sich daran anschließenden zweiten Plateaubereich 52 gebildet, wobei in der dargestellten Ausführungsform der zweite Keilabschnitt 56 von dem ersten Plateaubereich 50 durch eine Stufe 58 getrennt ist, die in dem Krafteinleitungsabschnitt 24 vorgesehen ist.

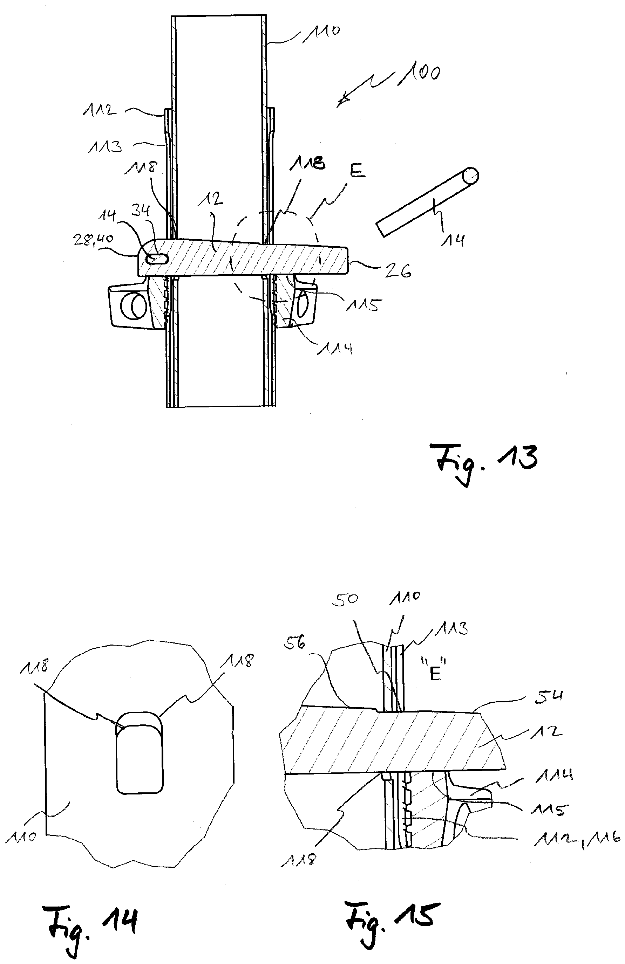

Die keilförmige Ausbildung des Bolzens 12 erweist sich dabei zum einen dahingehend als vorteilhaft, dass dadurch gewissermaßen eine Einführhilfe geschaffen wird, die das Einführen des Bolzens 12 in die Durchstecköffnungen zweier Stützenabschnitte 110, 112 erleichtert. Zum anderen ermöglicht die keilförmige Ausbildung des Bolzens 12 eine Schnellabsenkung einer teleskopierbaren Baustütze 100, deren Stützenabschnitte 110, 112 mit Hilfe solch eines keilförmigen Bolzens miteinander verbunden sind (siehe Fig. 13), indem beispielsweise mit Hilfe eines Hammerschlags eine Kraft auf die Stirnfläche am ersten Ende 26 des Bolzens 12 aufgebracht wird. Infolge des Hammerschlags wird der Bolzen 12 teilweise aus der Stütze 100 herausgetrieben, was zur Folge hat, dass sich das Innenrohr 110 entsprechend der Verjüngung des Bolzens 12 absenkt, wodurch die Stütze 100 entlastet wird und anschließend leichter demontiert werden kann.

Damit im Falle eines G-Hakens 10 mit keilförmigen Bolzen 12 die Lasten aus dem Innenrohr 110 nicht nur über die Lochleibung einer der Durchstecköffnungen 118 auf den Bolzen 12 übertragen werden, ist es bei dieser Ausführungsform vorgesehen, dass die Durchstecköffnungen 118 des Innenrohrs 110 unterschiedlich hoch sind (siehe Fig. 13 und 14). Die Höhen der beiden Durchstecköffnungen 118 sind dabei so zu wählen, dass das Innenrohr 110 entlang der oberen Lochleibungsbereiche seiner beiden Durchstecköffnungen 118 vollflächig auf dem Krafteinleitungsabschnitt 24 des keilförmigen Bolzens 12 aufsteht.

Um aufgrund dynamischer Lasten, die auf die Stütze 100 einwirken können, ein Losrütteln der sich keilförmig verjüngenden Bolzen 12 zu verhindern, erweist es sich als vorteilhaft, denselben in der bereits zuvor erläuterten Weise mit den beiden Plateaubereichen 50, 52 auszubilden, im Bereich derer sich der Bolzen 12 nicht verjüngt. Die Plateaubereiche 50, 52 sind dabei um ein Maß zueinander beabstandet, das etwa dem Rohrdurchmesser des Innenrohrs 110 entspricht, so dass dieses auf den beiden Plateaubereichen 50, 52 aufstehen kann. Darüber hinaus erweist sich die Ausbildung des Bolzens 12 mit den beiden Plateaubereichen 50, 52 dahingehend als vorteilhaft, dass die Länge der teleskopierbaren Stütze 100 nicht davon abhängt, wie weit der keilförmige Bolzen 12 in die Durchstecköffnungen 118 eingetrieben wird. Es muss lediglich gewährleistet werden, dass der keilförmige Bolzen 12 so weit in die Durchstecköffnungen 118 hineingetrieben wird, dass das Innenrohr 18 auf den Plateaubereichen 50, 52 aufsteht, wodurch sich sämtliche gleichartige Stützen, die mit einem solchen keilartigen Bolzen 12 ausgestattet sind, auf die gleiche Auszugslänge bringen lassen.

Um während des Eintreibens des keilförmigen Bolzens 12 in die Durchstecköffnung 18 des Innenrohrs 110 nicht Gefahr zu laufen, dass der Bolzen 12 so weit in die Stütze 100 eingetrieben wird, dass der zweite Keilabschnitt 56 in den Bereich der entsprechenden Durchstecköffnung 118 im Innenrohr 110 gelangt, ist zwischen dem zweiten Keilabschnitt 56 und dem ersten Plateaubereich 50 die bereits zuvor erwähnte Stufe 58 ausgebildet, die in diesem Falle gemäß Fig. 15 an der Innenwandung des Innenrohrs 110 zu liegen kommt und somit ein zu weites Eintreiben des Bolzens 12 in die Stütze 100 verhindert. Ein derartiges zu weites Eintreiben des Bolzens 12 in die Stütze 100 wird gleichermaßen durch den Bügel 14 verhindert, da dieser von dem Bolzen 12 in der zuvor erläuterten Weise vorzugsweise rechtwinklig absteht. Dies führt dazu, dass der Bügel 14 gemäß Fig. 13 mit dem Außenrohr 114 in Anlage gelangt, wodurch ein zu weites Eintreiben des Bolzens 12 in die Stütze 100 verhindert wird, so dass von der Ausbildung der Stufe 58 zwischen dem zweiten Keilabschnitt 56 und dem ersten Plateaubereich 50 abgesehen werden könnte.

### Bezugszeichenliste

- 10: G-Haken
- 12: Bolzen
- 14: Bügel
- 16: oberer Flansch
- 18: unterer Flansch
- 19: Mittelbereich von 16
- 20: Seitenbereiche von 16
- 21: Steg bzw. Übergangsbereich zwischen 16 und 18
- 22: Kraftabtragungsabschnitt
- 24: Krafteinleitungsabschnitt
- 26: erstes bzw. freies Ende von 12
- 28: zweites Ende von 12
- 30: erstes bzw. freies Ende von 14
- 32: zweites Ende von 14
- 34: Öffnung
- 36: Kerbe
- 38: Aufweitung
- 40: Stirnfläche
- 50: erster Plateaubereich
- 52: zweiter Plateaubereich
- 54: erster Keilabschnitt
- 56: zweiter Keilabschnitt
- 58: Stufe

- 100: teleskopierbare Baustütze
- 110: Innenrohr
- 112: Außenrohr
- 113: längliche Durchstecköffnung in 112
- 114: Absenkmutter
- 115: Stirnseite von 114
- 116: Außengewinde an 112
- 118: Durchstecköffnung in 110

## Patentansprüche

1. G-Haken (10) zur gegenseitigen, lösbaren Verbindung zweier Stützenabschnitte (110, 112) einer teleskopierbaren Baustütze (100), mit einem Bolzen (12), der zur gegenseitigen Verbindung der beiden Stützenabschnitte (110, 112) dient, und einem Bügel (14), über den der Bolzen (12) verliersicher an der Baustütze (100) sicherbar ist, wobei es sich bei dem Bolzen (12) und dem Bügel (14) um zwei unterschiedliche Teile handelt, die aus unterschiedlichen Materialien gefertigt und miteinander verbunden sind, und
wobei der Bolzen (12) und der Bügel (14) zu einem zusammengesetzten Bauteil zusammengefügt sind und
wobei der Bolzen (12) einen Krafteinleitungsabschnitt (24) mit zumindest bereichsweise gekrümmter Oberfläche (20) aufweist,
**dadurch gekennzeichnet, dass** der Bolzen (12) einen dem Krafteinleitungsabschnitt (24) diametral gegenüberliegenden Kraftabtragungsabschnitt (22) aufweist, dessen Oberfläche keine oder zumindest eine Krümmung aufweist, die geringer ist als die Krümmung der Oberfläche (20) des Krafteinleitungsabschnitts (24),
und dass der Bolzen (12) ein frei auskragendes erstes Ende (26) und ein dem ersten Ende (26) gegenüberliegendes zweites Ende (28) aufweist, im Bereich dessen er mit dem Bügel (14) derart verbunden ist, dass die Stirnfläche des Bolzens (12) an seinem zweiten Ende (28) als Schlagfläche frei liegt.

2. G-Haken nach Anspruch 1,
**dadurch gekennzeichnet, dass** der Bolzen (12) und der Bügel (14) aus Stählen unterschiedlicher Güte gefertigt sind.

3. G-Haken nach zumindest einem der vorstehenden Ansprüche,
**dadurch gekennzeichnet, dass**
der Krafteinleitungsabschnitt (24) und der Kraftabtragungsabschnitt (22) des Bolzens (12) über einen Übergangsabschnitt (21) miteinander verbunden sind, von dem der Bügel (14) vorzugsweise rechtwinklig absteht und sich anschließend in Richtung seines freien ersten Endes (30) zumindest bereichsweise parallel zu dem Bolzen (12) erstreckt.

4. G-Haken nach Anspruch 3,
**dadurch gekennzeichnet, dass**
im Bereich des zweiten Endes (28) des Bolzens (12) in seinem Übergangsabschnitt (21) eine Öffnung (34) ausgebildet ist, in der ein zweites Ende (32) des Bügels (14) gesichert ist, wobei vorzugsweise die Öffnung (34) und das zweite Bügelende (32) derart komplementär zueinander konturiert sind, dass das zweite Bügelende (32) formschlüssig in der Öffnung (34) gesichert ist.

5. G-Haken nach zumindest einem der vorstehenden Ansprüche,
**dadurch gekennzeichnet, dass**
der Bolzen (12) einen im Wesentlichen Doppel-T-Träger-artigen Querschnitt aufweist, wobei der Krafteinleitungsabschnitt (24) durch einen Flansch (16) mit zumindest bereichsweise gekrümmter Oberfläche (20) und der Kraftabtragungsabschnitt (22) durch den anderen Flansch (18) des Doppel-T gebildet wird, oder dass der Bolzen (12) einen U-förmigen Querschnitt aufweist, wobei die freien Enden des "U" jeweils einen Kraftabtragungsabschnitt (22) bilden, oder dass
der Bolzen (12) einen C-förmigen Querschnitt aufweist, wobei der Krafteinleitungsabschnitt (24) und der Kraftabtragungsabschnitt (22) durch einander diametral gegenüberliegende Krümmungsabschnitte des "C" gebildet werden, oder dass der Bolzen (12) einen rohr-, insbesondere einen O-förmigen Querschnitt oder einen ovalen Vollquerschnitt aufweist.

6. G-Haken nach zumindest einem der vorstehenden Ansprüche,
**dadurch gekennzeichnet, dass**
sich der Bolzen (12) in Richtung seines frei auskragenden ersten Endes (26) zumindest bereichsweise keilartig verjüngt, wobei der Bolzen (12) vorzugsweise zwei in Bolzenlängsrichtung zueinander beabstandete Plateaubereiche (50, 52) aufweist, im Bereich derer sich der Bolzen (12) nicht verjüngt.

7. G-Haken nach zumindest einem der vorstehenden Ansprüche,
**dadurch gekennzeichnet, dass**
der Bolzen (12) ausgehend von seinem frei auskragenden Ende (26) in Längsrichtung betrachtet durch einen sich aufweitenden ersten Keilabschnitt (54), einen sich daran anschließenden ersten Plateaubereich (50), einen sich daran anschließenden, sich aufweitenden zweiten Keilabschnitt (56) und einen sich daran anschließenden zweiten Plateaubereich (52) gebildet wird, wobei vorzugsweise der zweite Keilabschnitt (56) von dem ersten Plateaubereich (50) durch eine Stufe (58) getrennt ist.

8. Teleskopierbare Baustütze (100) mit einem Außenrohr (112) und einem darin verschieblichen Innenrohr (110), wobei zur gegenseitigen lösbaren Verbindung der beiden Rohre (110, 112) ein G-Haken (10) vorgesehen ist, der sich durch in den beiden Rohren (110, 112) ausgebildete und miteinander fluchtende Durchstecköffnungen (113, 118) erstreckt,
**dadurch gekennzeichnet, dass**
der G-Haken (10) gemäß einem der Ansprüche 1 bis 7 ausgebildet ist.

9. Baustütze nach Anspruch 8,
**dadurch gekennzeichnet, dass**
die Durchstecköffnungen (118) des Innenrohrs (110) zumindest entlang des Lochleibungsbereichs, über den die Kraftübertragung von dem Innenrohr (110) auf den Krafteinleitungsabschnitt (24) erfolgt, komplementär zur Umhüllenden des Bolzens (12) konturiert sind, wobei jeweils zwei miteinander fluchtende Durchstecköffnungen (118) des Innenrohrs (110) im Falle eines sich keilartig verjüngenden Bolzens (12) unterschiedlich hoch sind.

10. Teleskopstütze nach Anspruch 8 oder 9,
**dadurch gekennzeichnet, dass**
die miteinander fluchtenden Durchstecköffnungen (113) des Außenrohrs (112) als zwei in Stützenlängsrichtung verlaufende Schlitze (113) ausgebildet sind, im Bereich derer eine Absenkmutter (114) über ein am Außenrohr (112) ausgebildetes Außengewinde (116) in Stützenlängsrichtung bewegbar ist, wobei die Absenkmutter (114) eine plane Stirnseite (115) aufweist, auf der der Kraftabtragungsabschnitt (22) des Bolzens (12) des G-Hakens (10) flächig aufsteht.

## Claims

1. G-hook (10) for the mutual detachable connection of two prop portions (110, 112) of a telescopic construction prop (100), comprising a pin (12) that is used for the mutual connection of the two prop portions (110, 112) and a bracket (14), by means of which the pin (12) can be captively secured to the construction prop (100),
the pin (12) and the bracket (14) being two different parts that are made of different materials and are interconnected, and
the pin (12) and the bracket (14) being joined to form an assembled component and
the pin (12) comprising a force introduction portion (24) having a curved surface (20) at least in portions,
**characterized in that** the pin (12) comprises a force removal portion (22) that is diametrically opposed to the force introduction portion (24) and the surface of which has no curvature or at least a curvature that is smaller than the curvature of the surface (20) of the force introduction portion (24),
and **in that** the pin (12) comprises a freely projecting first end (26) and a second end (28) that opposes the first end (26), in the region of which second end said pin is connected to the bracket (14) such that the end face of the pin (12) at the second end (28) thereof is exposed as an impact surface.

2. G-hook according to claim 1, **characterized in that** the pin (12) and the bracket (14) are produced from steels of different grade.

3. G-hook according to at least one of the preceding claims, **characterized in that** the force introduction portion (24) and the force removal portion (22) of the pin (12) are interconnected via a transition portion (21) from which the bracket (14) protrudes preferably at a right angle and subsequently extends towards the free first end (30) thereof in parallel with the pin (12) at least in regions.

4. G-hook according to claim 3, **characterized in that** an opening (34) is formed in the region of the second end (28) of the pin (12) in the transition portion (21) thereof, in which opening a second end (32) of the bracket (14) is secured, the opening (34) and the second bracket end (32) preferably having mutually complementary contours such that the second bracket end (32) is interlockingly secured in the opening (34).

5. G-hook according to at least one of the preceding claims, **characterized in that** the pin (12) has a cross section that substantially has the shape of an I-beam, the force introduction portion (24) being formed by a flange (16) having a surface (20) that is curved at least in regions and the force removal portion (22) being formed by the other flange (18) of the I-beam, or
**in that** the pin (12) has a U-shaped cross section, the free ends of the "U" each forming a force removal portion (22), or **in that** the pin (12) has a C-shaped cross section, the force introduction portion (24) and the force removal portion (22) being formed by mutually diametrically opposed curved portions of the "C", or **in that** the pin (12) has a tubular, in particular O-shaped, cross section or a full oval cross section.

6. G-hook according to at least one of the preceding claims, **characterized in that** the pin (12) tapers towards its freely projecting first end (26) in a wedge-like manner at least in regions, the pin (12) comprising preferably two plateau regions (50, 52) that are mutually spaced in the longitudinal direction of the pin and in the region of which the pin (12) does not taper.

7. G-hook according to at least one of the preceding claims, **characterized in that** the pin (12) is formed, starting from its freely projecting end (26) as viewed in the longitudinal direction, by a widening first wedge portion (54), a first plateau region (50) connected thereto, a widening second wedge portion (56) connected thereto and a second plateau region (52) connected thereto, preferably the second wedge portion (56) being separated from the first plateau region (50) by a step (58).

8. Telescopic construction prop (100) comprising an outer tube (112) and an inner tube (110) that can be slid therein, a G-hook (10) being provided for the mutual detachable connection of the two tubes (110, 112), which G-hook extends through mutually aligned through-openings (113, 118) formed in the two tubes (110, 112), **characterized in that** the G-hook (10) is formed according to any of claims 1 to 7.

9. Construction prop according to claim 8, **characterized in that** the through-openings (118) of the inner tube (110) have a complementary contour to the covering portion of the pin (12) at least along the bearing stress region over which force is removed from the inner tube (110) to the force introduction portion (24), two mutually aligned through-openings (118) of the inner tube (110) each being of different heights in the case of a pin (12) tapering in a wedge-like manner.

10. Telescopic prop according to either claim 8 or claim 9, **characterized in that** the mutually aligned through-openings (113) of the outer tube (112) are formed as two slots (113) extending in the longitudinal direction of the prop, in the region of which slots a sunk nut (114) can be moved in the longitudinal direction of the prop via an external thread (116) formed on the outer tube (112), the sunk nut (114) comprising a planar end face (115) over the surface of which the force removal portion (22) of the pin (12) of the G-hook (10) rests.

## Revendications

1. Crochet en G (10) destiné à la liaison détachable mutuelle de deux parties d'étai (110, 112) d'un étai télescopique de construction (100), comprenant une broche (12) qui sert à la liaison mutuelle des deux parties d'étai (110, 112) et un support (14), au moyen duquel la broche (12) peut être fixée de manière captive à l'étai de construction (100),
la broche (12) et le support (14) étant deux pièces différentes qui sont constituées de matériaux différents et qui sont interconnectées, et
la broche (12) et le support (14) étant unis pour former un élément assemblé et
la broche (12) comprenant une partie d'introduction de force (24) présentant une surface incurvée (20) au moins en parties,
**caractérisé en ce que** la broche (12) comprend une partie d'annulation de force (22) qui est diamétralement opposée à la partie d'introduction de force (24) et dont la surface ne présente aucune courbure ou au moins une courbure qui est plus petite que la courbure de la surface (20) de la partie d'introduction de force (24),
et **en ce que** la broche (12) comprend une première extrémité qui fait librement saillie (26) et une seconde extrémité (28) qui est opposée à la première extrémité (26), dans la région de laquelle seconde extrémité ladite broche est reliée au support (14) de sorte que la face d'extrémité de la broche (12) au niveau de la seconde extrémité (28) de celle-ci est exposée sous forme de surface d'impact.

2. Crochet en G selon la revendication 1, **caractérisé en ce que** la broche (12) et le support (14) sont produits à partir d'aciers de différentes qualités.

3. Crochet en G selon au moins une des revendications précédentes, **caractérisé en ce que** la partie d'introduction de force (24) et la partie d'annulation de force (22) de la broche (12) sont interconnectées par le biais d'une partie de transition (21) à partir de laquelle le support (14) fait saillie de préférence selon un angle droit et s'étend ensuite vers la première extrémité libre (30) de celui-ci en parallèle avec la broche (12) au moins dans certaines régions.

4. Crochet en G selon la revendication 3, **caractérisé en ce qu'**une ouverture (34) est formée dans la région de la seconde extrémité (28) de la broche (12) dans la partie de transition (21) de celle-ci, dans laquelle une ouverture d'une seconde extrémité (32) du support (14) est attachée, l'ouverture (34) et la seconde extrémité de support (32) présentant de préférence des contours mutuellement complémentaires, de sorte que la seconde extrémité (32) du support est attachée de manière verrouillée dans l'ouverture (34).

5. Crochet en G selon au moins une des revendications précédentes, **caractérisé en ce que** la broche (12) présente une coupe transversale qui a sensiblement la forme d'une poutre en I, la partie d'introduction de force (24) étant formée par une bride (16) présentant une surface (20) qui est incurvée au moins dans certaines régions, et la partie d'annulation de force (22) étant formée par l'autre bride (18) de la poutre en I, ou **en ce que** la broche (12) présente une coupe transversale en forme de U, les extrémités libres du « U » formant chacune une partie d'annulation de force (22), ou **en ce que** la broche (12) présente une coupe transversale en forme de C, la partie d'introduction de force (24) et la partie d'annulation de force (22) étant formées par des parties incurvées mutuellement diamétralement opposées du « C », ou **en ce que** la broche (12) présente une coupe transversale tubulaire, en particulier en forme de O ou une coupe transversale ovale complète.

6. Crochet en G selon au moins une des revendications précédentes, **caractérisé en ce que** la broche (12) s'amincit vers sa première extrémité à saillie libre (26) à la manière d'un coin au moins dans certaines régions, la broche (12) comprenant de préférence deux régions en plateaux (50, 52) qui sont mutuellement espacées dans la direction longitudinale de la broche, et dans la région de laquelle la broche (12) ne s'amincit pas.

7. Crochet en G selon au moins une des revendications précédentes, **caractérisé en ce que** la broche (12) est formée, en partant de son extrémité à saillie libre (26) telle que vue dans la direction longitudinale, par une première partie de coin d'élargissement (54), une première région de plateau (50) reliée à celle-ci, une seconde partie de coin d'élargissement (56) reliée à celle-ci et une seconde région de plateau (52) reliée à celle-ci, de préférence la seconde partie de coin (56) étant séparée de la première région de plateau (50) par un gradin (58).

8. Étai télescopique de construction (100) comprenant un tube extérieur (112) et un tube intérieur (110) qui peut coulisser dans celui-ci, un crochet en G (10) étant doté de la liaison mutuelle détachable des deux tubes (110, 112), lequel crochet en G s'étend à travers des ouvertures traversantes mutuellement alignées (113, 118) formées dans les deux tubes (110, 112), **caractérisé en ce que** le crochet en G (10) est formé selon l'une quelconque des revendications 1 à 7.

9. Étai de construction selon la revendication 8, **caractérisé en ce que** les ouvertures traversantes (118) du tube intérieur (110) ont un contour complémentaire vis-à-vis de la partie couvrante de la broche (12) au moins le long de la région de contrainte de palier au-dessus de laquelle la force est annulée pour le tube intérieur (110) vis-à-vis de la partie d'introduction de force (24), deux ouvertures traversantes mutuellement alignées (118) du tube intérieur (110) dont chacune a une hauteur différente dans le cas d'une broche (12) s'amincissant à la manière d'un coin.

10. Étai de construction selon l'une ou l'autre des revendications 8 ou 9, **caractérisé en ce que** les ouvertures traversantes mutuellement alignées (113) du tube extérieur (112) sont formées de deux fentes (113) s'étendant dans la direction longitudinale de l'étai, fentes dans la région desquelles un écrou encastré (114) peut être déplacé dans la direction longitudinale de l'étai par le biais d'un filet externe (116) formé sur le tube extérieur (112), l'écrou encastré (114) comprenant une face d'extrémité plane (115) sur la surface de laquelle repose la partie d'annulation de force (22) de la broche (12) du crochet en G (10).
